# EUROPÄISCHE PATENTSCHRIFT

(11) **EP 1 260 436 B1**
(45) Veröffentlichungstag und Bekanntmachung des Hinweises auf die Patenterteilung: **23.11.2005**
(21) Anmeldenummer: 02405397.7
(22) Anmeldetag: 16.05.2002
(51) Int. Cl.: B65B 9/06, B65B 57/14

(54) **Vorrichtung und Verfahren zur Zuführung von Stückgütern zu einer Schlauchbeutel-Verpackungsstation**
Apparatus and process for feeding articles to a pouch form-, fill-, sealing machine
Dispositif et procédé pour alimenter des articles à une station d'ensachage

(30) Priorität: 23.05.2001 CH 9612001
(43) Veröffentlichungstag der Anmeldung: 27.11.2002
(73) Patentinhaber: ROBERT BOSCH GMBH, 70442 Stuttgart (DE)
(72) Erfinder: Wipf, Alfred, 79798 Jestetten (DE); Strasser, Thomas, 8463 Benken (CH)
(74) Vertreter: Clerc, Natalia

(56) Entgegenhaltungen:
- EP-A- 0 712 782
- CH-A- 675 233
- DE-U- 29 701 564
- US-A- 3 958 390

## Beschreibung

### Technisches Gebiet

Die Erfindung bezieht sich auf eine Vorrichtung und ein Verfahren zur Zuführung von Stückgütern zu einer Schlauchbeutel-Verpackungsstation gemäss Oberbegriff des Patentanspruches 1 beziehungsweise 13.

### Stand der Technik

Aus dem Stand der Technik sind verschiedene solche Vorrichtungen bekannt. So beschreibt US-A-4'663'915 ein Verfahren und eine Vorrichtung, um Käse in Schlauchbeuteln zu verpacken. Dabei wird der Käse in unmittelbarer Nähe der Verpackungsstation von einem Förderband auf eine Folie gefördert, wobei die Folie anschliessend in der Verpackungsstation zu einem Schlauchbeutel verarbeitet wird. Nicht beschrieben ist, wie der Käse auf das Förderband überführt wird. Dies wird im Stand der Technik im allgemeinen aber von Hand oder mittels Zufuhrketten mit Mitnehmern bewerkstelligt, wie dies beispielsweise in EP-A-0'712'782 offenbart ist.

CH-A-675'233 offenbart ferner ein Verfahren und eine Vorrichtung zum vollautomatischen Einlegen von Pralinen in dafür vorgesehene Behälter, wobei die Behälter auf einem Fliessband an einer Beschickungsstation vorbeigefördert werden. Die Beschickungsstation ist mit einem optischen Lageerkennungssystem ausgerüstet, welches die Lage jeder ankommenden Praline erfasst. Aufgrund der ermittelten Daten werden die Pralinen von einer frei programmierbaren Greifvorrichtung ergriffen und in gewünschter Ausrichtung und Abständen auf ein Förderband gelegt. Dieses Förderband transportiert die Pralinen zu einem Einlegebereich mit einer zweiten Greifvorrichtung, mittels welcher die Pralinen in die Behälter abgelegt werden.

EP-B-0'439'741 offenbart einen Roboter, um Gegenstände auf zeitsparende Weise von einem ersten Förderband auf ein zweites Förderband zu transportieren.

### Darstellung der Erfindung

Es ist Aufgabe der Erfindung, eine Vorrichtung und ein Verfahren zur Zuführung von Stückgütern zu einer Schlauchbeutel-Verpackungsstation zu schaffen, welche einfach und kostengünstig, aber wirkungsvoll sind.

Diese Aufgabe löst eine Vorrichtung und ein Verfahren mit den Merkmalen des Patentanspruches 1 beziehungsweise 11.

Erfindungsgemäss werden die Stückgüter mittels einer Lageerkennungseinheit und einer Greifeinheit von einem Zufuhrförderer auf eine Packstoffbahn gelegt und gemeinsam mit dieser Packstoffbahn zur Verpackungsstation gefördert, wo die Packstoffbahn zu einem Schlauchbeutel verarbeitet wird.

In einer bevorzugten Variante werden die Stückgüter direkt vom Zufuhrförderer auf die Packstoffbahn gelegt. In einer anderen Variante werden sie in vorgegebener Position auf einen Zwischenförderer gelegt, welcher die Stückgüter in dieser Position an die Packstoffbahn übergibt.

Dank der erfindungsgemässen Vorrichtung lassen sich Zufuhrketten mit Mitnehmern vermeiden. Dadurch lassen sich die Herstellungskosten reduzieren. Zudem wird der Platzbedarf der gesamten Anlage vermindert.

Die erfindungsgemässe Vorrichtung erlaubt eine hohe Flexibilität in der Art der Gruppierung und Förderung der Stückgüter. Des weiteren ermöglicht sie einen erhöhten Durchsatz.

Weitere vorteilhafte Varianten des Verfahrens und vorteilhafte Ausführungsformen gehen aus den abhängigen Patentansprüchen hervor.

### Kurze Beschreibung der Zeichnungen

Im folgenden wird der Erfindungsgegenstand anhand von bevorzugten Ausführungsbeispielen, welche in den beiliegenden Zeichnungen dargestellt sind, erläutert. Es zeigen:
- Figur 1: eine schematische Darstellung einer erfindungsgemässen Vorrichtung mit einer Schlauchbeutel-Verpackungsstation in einer ersten Ausführungsform;
- Figur 2: einen vergrösserten Ausschnitt aus Figur 1;
- Figur 3: eine erfindungsgemässe Vorrichtung mit Verpackungsstation in einer zweiten Ausführungsform und
- Figur 4: eine erfindungsgemässe Vorrichtung mit Verpackungsstation in einer dritten Ausführungsform.

### Wege zur Ausführung der Erfindung

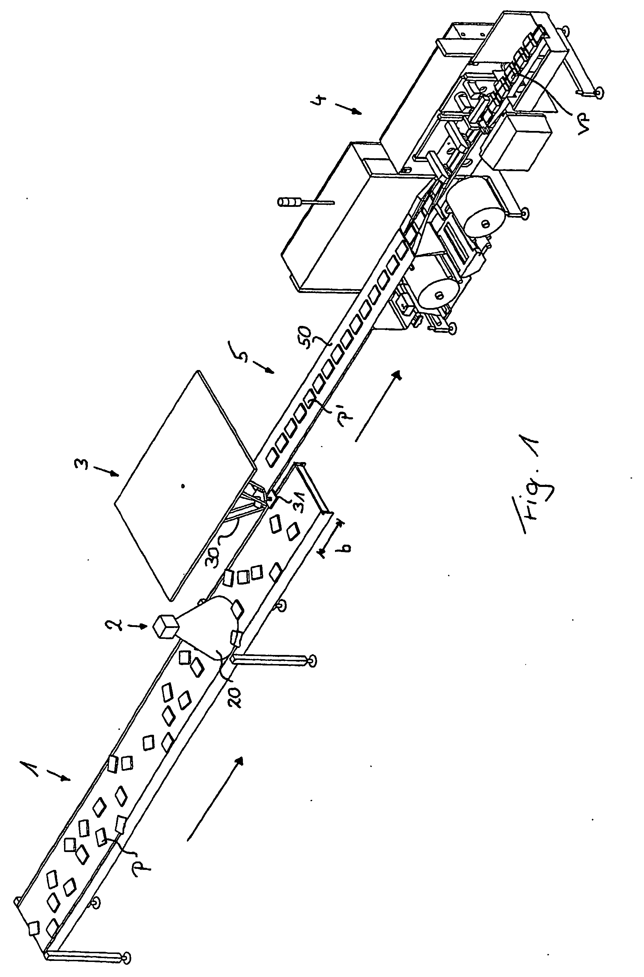

In Figur 1 ist eine erfindungsgemässe Vorrichtung in einer ersten Ausführungsform dargestellt. Sie weist einen Zufuhrförderer 1 auf, welcher im allgemeinen ein Förderband ist. Auf diesem Zufuhrförderer 1 werden Stückgüter P in ungeordneter oder geordneter Ausrichtung von einer Produktionsstätte oder einem Zwischenlager einer Verpackungsstation 4 zugeliefert. Im Bereich dieses Zufuhrförderers 1 ist mindestens eine Lageerkennungseinheit 2 vorhanden. Die eine Lageerkennungseinheit 2 oder mehrere Lageerkennungseinheiten 2 gemeinsam weist beziehungsweise weisen ein Detektionsfeld 20 auf, welches mindestens annähernd die gesamte Förderbreite des Zufuhrförderers 1 abdeckt. In Förderrichtung nach der mindestens einen Lageerkennungseinheit 2 ist mindestens eine Greifeinheit 3 angeordnet. Sind mehrere Greifeinheiten 3 vorhanden, so sind sie vorzugsweise in Förderrichtung hintereinander angeordnet. Vorzugsweise ist die Greifeinheit 3 ein Deltaroboter mit mehreren Roboterarmen 30 und einem Greifelement 31, beispielsweise einem Saugnapf oder einer Greifzange.

Benachbart zum Zufuhrförderer 1 ist ein Packstoffbahnförderer 5 angeordnet, welcher eine Packstoffbahn 50 zur Verpackungsstation 4 fördert, wo der Packstoff zu Schlauchbeuteln verarbeitet wird. Im hier dargestellten Beispiel ist die Packstoffbahn 50 eine Folienbahn.

Erfindungsgemäss werden die Lage und Ausrichtung der vom Zufuhrförderer 1 angelieferten Stückgüter P mittels der Lageerkennungseinheit 2 detektiert und mittels der Greifeinheit 3 nach Massgabe der Detektion erfasst und in vorgegebener, für die anschliessende Bildung der Schlauchbeutel geeigneten Position unmittelbar auf die Packstoffbahn 50 gelegt. Werden die Stückgüter P auf dem Zufuhrförderer 1 ungeordnet angeliefert, werden sie geordnet und/oder gruppiert. Werden sie in geordneter Weise angeliefert, werden sie entsprechend der Verpackungsart ebenfalls umgeordnet und/oder gruppiert. Die mit der Packstoffbahn 50 zur Verpackungsstation 4 transportierten, nun geordneten Stückgüter P' werden in der Verpackungsstation 4 verpackt und verlassen diese als verpackte Produkte VP. Auf dem Packstoffförderer 5 können manuelle oder automatische Sichtkontrollen durchgeführt werden. Die Packstoffbahn 50 weist dabei einen so hohen Reibungskoeffizienten auf, dass das Stückgut schlupffrei transportiert wird.

Vorzugsweise fluchtet, wie in Figur 1 dargestellt, ein dem Zufuhrförderer 1 zugewandter Anfang der Auflagefläche des Packstoffbahnförderers 5 mit einem dem Packstoffbahnförderer 5 zugewandten Ende der Auflagefläche des Zufuhrförderers 1. Im hier dargestellten Ausführungsbeispiel ist der Packstoffbahnförderer 5 in senkrechter Richtung zur Förderrichtung versetzt zum Zufuhrförderer 1 angeordnet. Vorzugsweise ist er dabei mindestens annähernd angrenzend an den Zufuhrförderer 1 angeordnet und überlappt diesen längs der Förderrichtung über eine Teilstrecke b. Dadurch wird der Übertragungsweg für die Greifeinheit 3 minimiert. Die Förderrichtung ist in der Figur mit einem Pfeil dargestellt.

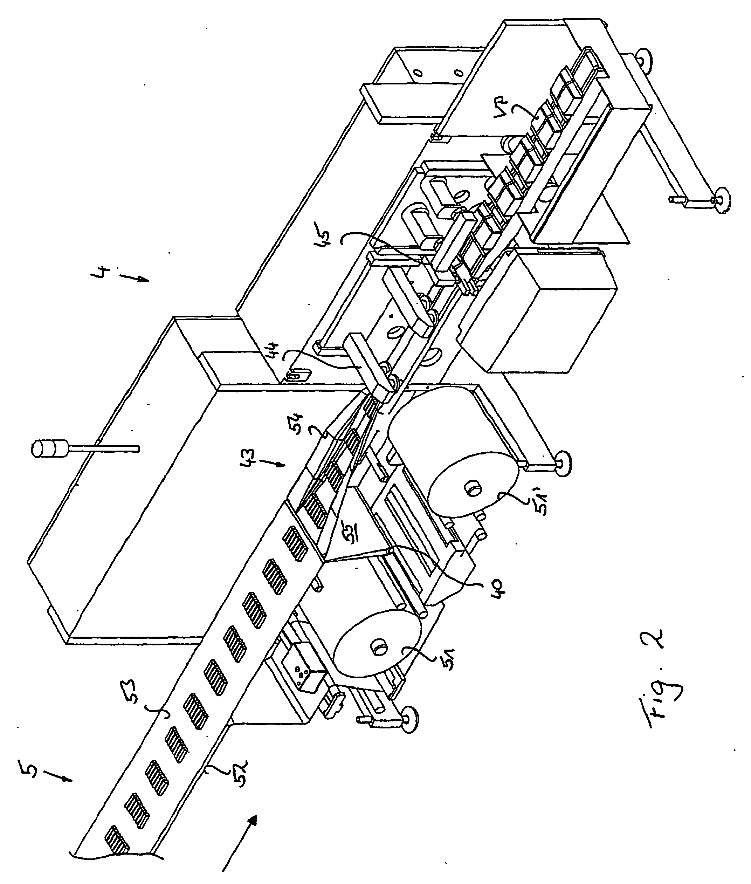

In Figur 2 ist in einem vergrösserten Ausschnitt die Verpackungsstation 4 und ein Teil des Packstoffbahnförderers 5 dargestellt. Die Packstoffbahn 50 wird von einer Packstoffrolle 51 abgerollt, wobei sie über Umlenkungsmittel auf der Unterseite 52 des Packstoffbahnförderes 5 zu dessen Anfang und über mindestens eine Umlenkrolle auf seiner Oberseite 53 zur Verpackungsstation 4 zurückgefördert wird. Die Bezugsziffer 51' bezeichnet eine Ersatz-Packstoffrolle. Der Packstoffbahnförderer 5 ist in zwei Teilförderer gegliedert, wobei die Packstoffbahn 50 zwischen den zwei Teilförderern über höhenverstellbare Umlenkungsmittel 40, beispielsweise eine Rolle, eine Schlaufe 54 bildet. In Förderrichtung anschliessend ist im Bereich des zweiten Teilförderers eine Falteinheit 43, beispielsweise ein Faltkasten, angeordnet, welche die Packstoffbahn 50 mindestens auf einer Seite nach oben faltet. Im hier dargestellten Ausführungsbeispiel wird die Packstoffbahn 50 symmetrisch beidseitig nach oben gefaltet. Die Schlaufenbildung, beziehungsweise das Umlenkungsmittel 40, ermöglichen eine Regelung der Geschwindigkeit der Packstoffzufuhr und der auf die Packstoffbahn 50 wirkenden Zugspannung

Vorzugsweise sind die Verpackungsstation 4, die Lageerkennungseinheit 2 und die Greifeinheit 3 mit einer gemeinsamen Steuerung verbunden, so dass die Greifeinheit 3 nach Massgabe der Lageerkennungseinheit 2 und nach Massgabe der Funktionsfähigkeit der Verpackungsstation 4 arbeitet. Auch die Umlenkungsmittel 40 lassen sich entsprechend über die gemeinsame Steuerung regeln.

In Förderrichtung folgt eine Längssiegeleinheit 44, mittels welcher die Packstoffbahn 50 mit einer oberen Längssiegelnaht versehen wird. In einer nachfolgenden Quersiegeleinheit 45 wird die Packstoffbahn 50 querversiegelt und in entsprechende Packungen VP getrennt.

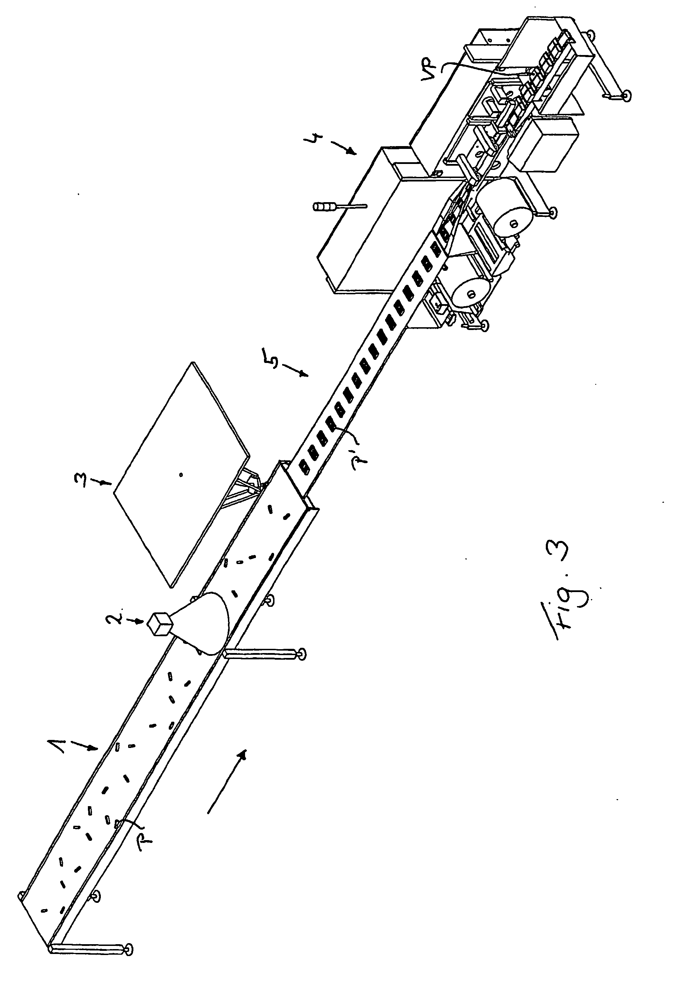

In Figur 3 ist eine zweite Ausführungsform der erfindungsgemässen Vorrichtung dargestellt. Hier ist der Packstoffbahnförderer 5 und der Zufuhrförder 1 in Förderrichtung in einer Linie angeordnet.

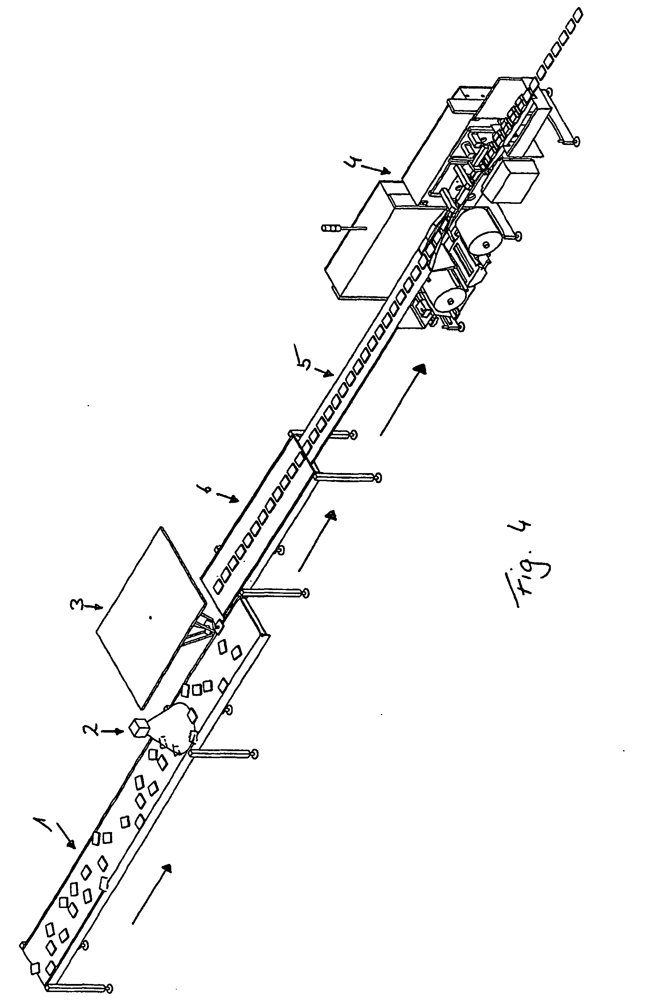

In der in Figur 4 dargestellten dritten Ausführungsform ist zwischen dem Zufuhrförderer 1 und dem Packstoffbahnförderer 5 ein Zwischenförderer 6 vorhanden, wobei die Greifeinheit 3 die Stückgüter P in der für die spätere Verpackung vorgegebenen Po-sition auf dem Zwischenförderer 6 ablegt. Vorzugsweise fluchtet das dem Zwischenförderer 6 zugewandtes Ende der Auflagefläche des Zufuhrförderers 1 mit dem dem Zufuhrförderer 1 zugewandten Anfang der Auflagefläche des Zwischenförderers 6, so dass auch hier wiederum der Transportweg der Greifeinheit 3 minimiert ist. Der Zwischenförderer 6 und der Packstoffbahnförderer 5 sind in Förderrichtung in einer Linie angeordnet, wobei der Packstoffbahnförderer 5 vorzugsweise eine Umlenkrolle aufweist, welche einen minimierten Durchmesser hat, damit der Übergang vom einen Förderer 6, 5 zum anderen einen möglichst kleinen Spalt bildet. Auch der Zwischenförderer 6 weist einen Reibungsfaktor auf, welcher eine ungewollte Lageveränderung des Stückgutes während des Transports vermeidet.

Die erfindungsgemässe Vorrichtung ermöglicht, da die Stückgüter bereits auf der Packstoffbahn zur Verpackungsstation gefördert werden, eine einfache, aber effiziente Verpackung von Stückgütern in Schlauchbeutel.

### Bezugszeichenliste

- P: ungeordnetes Stückgut
- P': geordnetes Stückgut
- VP: verpacktes Stückgut
- b: Teilstrecke
- 1: Zufuhrförderer
- 2: Lageerkennungseinheit
- 20: Kontrollfeld
- 3: Greifeinheit
- 30: Roboterarme
- 31: Greifelement
- 4: Verpackungsstation
- 40: Umlenkungsmittel
- 41: Erste Faltkante
- 42: Zweite Faltkante
- 43: Falteinheit
- 44: Längssiegeleinheit
- 45: Quersiegeleinheit
- 5: Packstoffbahnförderer
- 50: Packstoffbahn
- 51: Packstoffrolle
- 51': Ersatz-Packstoffrolle
- 52: Untere Seite des Packstoffbahnförderers
- 53: Obere Seite des Packstoffbahnförderers
- 54: Schlaufe
- 55: Falte
- 6: Zwischenförderer

## Patentansprüche

1. Vorrichtung zur Zuführung von Stückgütern (P) zu einer Schlauchbeutel-Verpackungsstation (4), mit einem Zufuhrförderer (1) zur Zufuhr der Stückgüter (P) und einem Packstoffbahnförderer (5) zur Förderung einer Packstoffbahn (50) zur Verpackungsstation (4), **dadurch gekennzeichnet, dass** eine Lageerkennungseinheit (2) zur Erkennung der auf dem Zufuhrförderer (1) geförderten Stückgüter (P) und mindestens eine Greifeinheit(3) zur Entnahme der Stückgüter (P) vom Zufuhrförderer (1) und zur mittel-oder unmittelbaren Ablage der Stückgüter (P') in vorgegebener Position auf der Packstoffbahn (50) vorhanden ist, wobei die Ablage beabstandet zur und in Förderrichtung vor einer Falteinheit der Verpackungsstation erfolgt und wobei zur Verarbeitung der Packstoffbahn zu Schlauchbeuteln die Stückgüter (P') auf der Packstoffbahn (50) zur Verpackungsstation (4) förderbar sind, wobei der Packstoffbahnförderer (5) in zwei Teilförderer gegliedert ist, wobei die Packstoffbahn (50) zwischen den zwei Teilförderern über Umlenkungsmittel (40) eine Schlaufe (54) bildet und wobei die Falteinheit (43) im Bereich des zweiten Teilförderers angeordnet ist.

2. Vorrichtung nach Anspruch 1, **dadurch gekennzeichnet, dass** eine Falteinheit (43) vorhanden ist, um die mit den Stückgütern (P') bestückte Packstoffbahn (50) mindestens auf einer Seite, insbesondere beidseitig, nach oben zu falten.

3. Vorrichtung nach Anspruch 1, **dadurch gekennzeichnet, dass** zwischen dem Zufuhrförderer (1) und dem Packstoffbahnförderer (5) ein Zwischenförderer (6) vorhanden ist, wobei die Greifeinheit (2) die Stückgüter (P) in der obengenannten vorgegebenen Position auf dem Zwischenförderer (6) ablegt.

4. Vorrichtung nach Anspruch 1, **dadurch gekennzeichnet, dass** ein dem Packstoffbahnförderer (5) zugewandtes Ende einer Auflagefläche des Zufuhrförderers (1) mit einem dem Zufuhrförderer (1) zugewandten Anfang einer Auflagefläche des Packstoffbahnförderers (5) fluchtet.

5. Vorrichtung nach Anspruch 3, **dadurch gekennzeichnet, dass** ein dem Zwischenförderer (6) zugewandtes Ende einer Auflagefläche des Zufuhrförderers (1) mit einem dem Zufuhrförderer (1) zugewandten Anfang einer Auflagefläche des Zwischenförderer (6) fluchtet.

6. Vorrichtung nach Anspruch 1, **dadurch gekennzeichnet, dass** mindestens zwei Greifeinheiten (3) in Förderrichtung hintereinander angeordnet sind.

7. Vorrichtung nach Anspruch 1, **dadurch gekennzeichnet, dass** die Greifeinheit (3) ein Deltaroboter ist.

8. Vorrichtung nach Anspruch 1, **dadurch gekennzeichnet, dass** die Lageerkennungseinheit (2), die Greifeinheit (3) und die Verpackungsstation (4) mit einer gemeinsamen Steuerung verbunden sind.

9. Vorrichtung nach Anspruch 1 oder 3, **dadurch gekennzeichnet, dass** der Zufuhrförderer (1) beziehungsweise der Zwischenförderer (6) mit dem Packstoffbahnförderer (5) in Förderrichtung in einer Linie angeordnet ist.

10. Vorrichtung nach Anspruch 1, **dadurch gekennzeichnet, dass** der Packstoffbahnförderer (5) in senkrechter Richtung zur Förderrichtung versetzt zum Zufuhrförderer (1) angeordnet ist.

11. Verfahren zur Zuführung von Stückgütern (P) zu einer Schlauchbeutel-Verpackungsstation (4), wobei die Stückgüter (P) mit einem Zufuhrförderer (1) und eine Packstoffbahn (50) mit einem Packstoffbahnförderer (5) der Verpackungsstation (4) zugeführt werden und die Stückgüter (P) vor Bildung der Schlauchbeutel auf die Packstoffbahn (50) gelegt werden, **dadurch gekennzeichnet, dass** als Packstoffbahnförderer (5) zwei Teilförderer verwendet werden, wobei die Packstoffbahn (50) zwischen den zwei Teilförderern über Umlenkmittel (40) in einer Schlaufe (54) geführt wird, dass die Lage der auf dem Zufuhrförderer (1) geförderten Stückgüter (P) mittels einer Lageerkennungseinheit (2) detektiert wird und die Stückgüter (P) mittels mindestens einer Greifeinheit (3) vom Zufuhrförderer (1) entnommen und in für die Verpackung benötigter vorgegebenen Position mittel- oder unmittelbar sowie beabstandet zur und in Förderrichtung vor einer Falteinheit der Verpackungsstation auf die Packstoffbahn (50) gelegt werden, wobei die Falteinheit (43) im Bereich des zweiten Teilförderers angeordnet ist und wobei die Stückgüter (P') auf der Packstoffbahn (50) zur Verpackungsstation (4) gefördert werden zur Verarbeitung der Packstoffbahn zu Schlauchbeuteln.

## Claims

1. An apparatus for feeding articles (P) to a tubular-bag packaging station (4), having a feed conveyer (1) for feeding the articles (P) and a packaging-material-web conveyer (5) for conveying a packaging-material web (50) to the packaging station (4), **characterized in that** a position-detecting unit (2) is provided for detecting the articles (P) conveyed on the feed conveyer (1), and at least one gripping unit (3) is provided for removing the articles (P) from the feed conveyer (1) and for depositing the articles (P') directly or indirectly in a predetermined position on the packaging-material web (50), wherein the deposition is effected offset to and in conveyor direction in front of a folding unit of the packaging station, wherein, for forming the packaging-material-web into tubular bags, the articles (P') are conveyed on the packaging-material web (50) towards the packaging station (4), wherein the packaging-material-web conveyer (5) is subdivided into two sub-conveyers, the packaging-material web (50), between the two sub-conveyers, forming a loop (54) via deflecting means (40), and wherein the folding unit (43) is arranged in the region of the second sub-conveyer.

2. The apparatus as claimed in claim 1, **characterized in that** a folding unit (43) is provided in order for the packaging-material web (50) provided with the articles (P') to be folded upward at least on one side, in particular on both sides.

3. The apparatus as claimed in claim 1, **characterized in that** an intermediate conveyer (6) is provided between the feed conveyer (1) and the packaging-material-web conveyer (5), the gripping unit (2) depositing the articles (P) in the abovementioned predetermined position on the intermediate conveyer (6).

4. The apparatus as claimed in claim 1, **characterized in that that** end of a bearing surface of the feed conveyer (1) which is directed toward the packaging-material-web conveyer (5) is aligned with a start of a bearing surface of the packaging-material-web conveyer (5), the start of said surface being directed toward the feed conveyer (1).

5. The apparatus as claimed in claim 3, **characterized in that that** end of a bearing surface of the feed conveyer (1) which is directed toward the intermediate conveyer (6) is aligned with a start of a bearing surface of the intermediate conveyer (6), the start of said surface being directed toward the feed conveyer (1).

6. The apparatus as claimed in claim 1, **characterized in that** at least two gripping units (3) are arranged one behind the other in the conveying direction.

7. The apparatus as claimed in claim 1, **characterized in that** the gripping unit (3) is a delta-type robot.

8. The apparatus as claimed in claim 1, **characterized in that** the position-detecting unit (2), the gripping unit (3) and the packaging station (4) are connected to a common control means.

9. The apparatus as claimed in claim 1 or 3, **characterized in that** the feed conveyer (1) or the intermediate conveyer (6) is arranged in a line, in the conveying direction, with the packaging-material-web conveyer (5).

10. The apparatus as claimed in claim 1, **characterized in that** the packaging-material-web conveyer (5) is offset in relation to the feed conveyer (1) in the direction perpendicular to the conveying direction.

11. A method of feeding articles (P) to a tubular-bag packaging station (4), the articles (P) being fed by a feed conveyer (1) and a packaging-material web (50) being fed by a packaging-material-web conveyer (5) to the packaging station (4), and the articles (P) being positioned on the packaging-material web (50) before the tubular bags are formed, **characterized in that** two sub-conveyers are used as the packaging-material-web conveyer (5), wherein the packaging-material web (50), between the two sub-conveyers, forming a loop (54) via deflecting means (40), wherein the position of the articles (P) conveyed on the feed conveyer (1) is detected by means of a position-detecting unit (2), and the articles (P) are removed by at least one gripping unit (3) from the feed conveyer (1) and positioned directly or indirectly, in a predetermined position required for the packaging, offset to and in conveyor direction in front of a folding unit of the packaging station on the packaging-material web (50), wherein the folding unit (43) is arranged in the region of the second sub-conveyer and wherein the articles (P') are conveyed on the packaging-material web (50) to the packaging station (4) for forming the packaging-material web into tubular bags.

## Revendications

1. Dispositif pour alimenter des articles (P) à une station d'ensachage (4) avec un convoyeur d'alimentation (1) pour alimenter des articles (P) et avec un convoyeur de bande de matériel d'emballage (5) pour convoyer une bande de matériel d'emballage (50) à une station d'ensachage (4), **caractérisé en ce qu'**il est prévu une unité de reconnaissance de position (2) pour reconnaître les articles (P) étant convoyé sur le convoyeur d'alimentation (1) et au moins une unité de saisie (3) pour prélever les articles (P) du convoyeur d'alimentation (1) et pour le dépôt direct ou indirect des articles (P') dans une position prédéterminée sur la bande de matériel d'emballage (50), où le dépôt se fait à distance par rapport à et dans la direction du convoyeur devant une unité de pliage de la station d'ensachage et où les articles (P') peuvent être convoyés sur la bande de matériel d'emballage (50) à la station d'ensachage (4) pour travailler la bande de matériel d'emballage en forme de sachets tubulaires, où le convoyeur de bande de matériel d'emballage (5) est séparé en deux convoyeurs partiels, où la bande de matériel d'emballage (50) forme une boucle (54) entre les deux convoyeurs partiels par des moyens de détournement (40), et où l'unité de pliage (43) est positionnée dans la zone du deuxième convoyeur partiel.

2. Dispositif selon la revendication 1, **caractérisé en ce qu'**une unité de pliage (43) est prévue pour plier vers le haut la bande de matériel d'emballage (50), étant équipée avec les articles (P'), sur au moins un côté, en particulier des deux côtés.

3. Dispositif selon la revendication 1, **caractérisé en ce qu'**un convoyeur intermédiaire (6) est prévu entre le convoyeur d'alimentation (1) et le convoyeur de bande de matériel d'emballage (5), où l'unité de saisie (2) pose les articles (P) dans la dite position prédéterminée sur le convoyeur intermédiaire (6).

4. Dispositif selon la revendication 1, **caractérisé en ce qu'**une extrémité d'une surface de disposition du convoyeur d'alimentation (1) tournée vers le convoyeur de bande de matériel d'emballage (5) est alignée avec un début d'une surface de disposition du convoyeur de bande de matériel d'emballage (5) tourné vers le convoyeur d'alimentation (1).

5. Dispositif selon la revendication 3, **caractérisé en ce qu'**une extrémité d'une surface de disposition du convoyeur d'alimentation (1) tournée vers le convoyeur intermédiaire (6) est alignée avec un début d'une surface de disposition du convoyeur intermédiaire (6) tourné vers le convoyeur d'alimentation (1).

6. Dispositif selon la revendication 1, **caractérisé en ce qu'**au moins deux unités de saisie (3) sont positionnées l'une après l'autre dans la direction du convoyeur.

7. Dispositif selon la revendication 1, **caractérisé en ce que** l'unité de saisie (3) est un robot delta.

8. Dispositif selon la revendication 1, **caractérisé en ce que** l'unité de reconnaissance de position (2), l'unité de saisie (3) et la station d'emballage (4) sont connectés avec une commande commune.

9. Dispositif selon la revendication 1 ou 3, **caractérisé en ce que** le convoyeur d'alimentation (1) ou le convoyeur intermédiaire (6) sont positionnés dans une ligne avec le convoyeur de bande de matériel d'emballage (5) dans la direction de convoyeur.

10. Dispositif selon la revendication 1, **caractérisé en ce que** le convoyeur de bande de matériel d'emballage (5) est positionné à distance dans une direction orthogonale par rapport à la direction du convoyeur par rapport au convoyeur d'alimentation (1).

11. Procédé pour alimenter des articles (P) à une station d'emballage de sachet tubulaire (4), où les articles (P) sont amenés avec un convoyeur d'alimentation (1) et une bande de matériel d'emballage (50) est amenée avec un convoyeur de bande de matériel d'emballage (5) à la station d'emballage (4) et où les articles (P) sont positionnés avant la formation des sachets tubulaires sur la bande de matériel d'emballage (50), **caractérisé en ce que** deux convoyeurs partiels sont utilisés en tant que convoyeur de bande de matériel d'emballage (5), où la bande de matériel d'emballage (50) est amené entre les deux convoyeurs partiels par des moyens de détournement (40) dans une boucle (54), **en ce que** la position des articles (P) convoyés sur le convoyeur d'alimentation (1) est détectée par l'unité de reconnaissance de position (2) et les articles (P) sont prélevés par au moins unité de saisie (3) du convoyeur d'alimentation (1) et sont positionnés dans une position prédéterminée, nécessaire pour l'emballage, directement ou indirectement et à distance par rapport à et dans la direction du convoyeur devant une unité de pliage de la station d'emballage sur la bande de matériel d'emballage (50), où l'unité de pliage (43) est positionnée dans la zone du deuxième convoyeur partiel et où les articles (P') sont convoyés sur la bande de matériel d'emballage (50) à la station d'emballage (4) pour travailler la bande de matériel d'emballage en forme de sachets tubulaires.
